# EUROPEAN PATENT APPLICATION

(11) **EP 4 628 760 A1**
(43) Date of publication of application: **08.10.2025**
(21) Application number: 24212568.0
(22) Date of filing: 13.11.2024
(51) Int. Cl.: F16H 59/78, F16H 61/662, F16H 59/24, F16H 59/44, F16H 61/00, F16H 61/02

(54) **STRADDLED VEHICLE**

(30) Priority: 04.04.2024 JP 2024061071
(71) Applicant: Yamaha Hatsudoki Kabushiki Kaisha, Iwata-shi, Shizuoka 438-8501 (JP)
(72) Inventor: YOSHIMURA, Go, Iwata-shi, 4388501 (JP); MATSUSHIMA, Hidehiro, Iwata-shi, 4388501 (JP)
(74) Representative: Studio Torta S.p.A.

(57) **Abstract**

There is disclosed a straddled vehicle (1) including an engine (14), a catalyst (39), a wheel (5), a continuously variable transmission (15), a temperature sensor (104), and a controller (100); the temperature sensor (104) detectings the temperature of the engine (14); the controller (100) controlling the continuously variable transmission (15); the continuously variable transmission (15) being electrically controlled to change a gear ratio in accordance with a command signal transmitted thereto from the controller (100); the controller (100) obtaining the temperature of the engine (14); the controller (100) controlling the gear ratio of the continuously variable transmission (15) such that the rotational speed of the engine (14) gets higher in a low temperature condition that the temperature of the engine (14) is less than or equal to a predetermined first threshold temperature than in a normal condition that the temperature of the engine (14) is greater than the first threshold temperature.

## Description

### Technical field

The present invention relates to a straddled vehicle.

### Background

There is a type of straddled vehicle provided with a catalyst for purifying exhaust gas emitted from an engine. For example, a motorcycle described in Japan Laid-open Patent Application Publication No. 2022-167313 includes an engine and an exhaust pipe connected thereto. A catalyst is disposed inside the exhaust pipe.

Activation of the catalyst is delayed when the engine is low in temperature, for instance, immediately after start of the engine. Early activation of the catalyst is demanded to effectively purify the exhaust gas. For this demand, it can be assumed to promote the activation of the catalyst by, for instance, increasing the throttle opening degree of the engine to increase the rotational speed of the engine when the engine is low in temperature. However, this assumption has a negative impact on the behavior of the engine. It is an object of the present invention not only to exert early activation of a catalyst but also to inhibit a negative impact on the behavior of an engine in a straddled vehicle.

### Description of the invention

A straddled vehicle according to an aspect of the present invention includes an engine, a catalyst, a wheel, a continuously variable transmission, a temperature sensor, and a controller. The catalyst purifies an exhaust gas emitted from the engine. The continuously variable transmission transmits a driving force generated from the engine to the wheel. The temperature sensor detects a temperature of the engine. The controller controls the continuously variable transmission. The continuously variable transmission is electrically controlled to change a gear ratio in accordance with a command signal transmitted thereto from the controller. The controller obtains the temperature of the engine. The controller controls the gear ratio of the continuously variable transmission such that a rotational speed of the engine gets higher in a low temperature condition that the temperature of the engine is less than or equal to a predetermined first threshold temperature than in a normal condition that the temperature of the engine is greater than the first threshold temperature.

In the straddled vehicle according to the present aspect, the gear ratio of the continuously variable transmission is changed such that the rotational speed of the engine gets higher in the low temperature condition of the engine than in the normal condition. Accordingly, even in the low temperature condition, the exhaust gas increases in volume, whereby the activation of the catalyst is promoted. Besides, the gear ratio of the continuously variable transmission is electrically controlled, whereby the rotational speed of the engine is increased. Because of this, a negative impact on the behavior of the engine can be more inhibited than when the rotational speed of the engine is increased by changing the throttle opening degree.

The engine may include a crankshaft. The continuously variable transmission may include a primary pulley, a secondary pulley, a belt, and an electric actuator. The primary pulley may include a first movable sheave and a first stationary sheave. The primary pulley may be connected to the crankshaft. The secondary pulley may include a second movable sheave and a second stationary sheave. The secondary pulley may be attached to the wheel. The belt may be wound about the primary pulley and the secondary pulley. The electric actuator may change the gear ratio of the continuously variable transmission by moving the first movable sheave with respect to the first stationary sheave. The controller may change the gear ratio of the continuously variable transmission by controlling the electric actuator such that the rotational speed of the engine gets higher in the low temperature condition than in the normal condition. In this case, the gear ratio of the continuously variable transmission is changed by controlling the electric actuator such that the rotational speed of the engine gets higher in the low temperature condition of the engine than in the normal condition.

The straddled vehicle may further include a vehicle velocity sensor and a throttle sensor. The vehicle velocity sensor may detect a vehicle velocity of the straddled vehicle. The throttle sensor may detect a throttle opening degree of the engine. The controller has stored normal condition data and low temperature condition data. The normal condition data may define a relation of a target rotational speed for the engine with respect to the vehicle velocity and the throttle opening degree in the normal condition. The low temperature condition data may define a relation of the target rotational speed for the engine with respect to the vehicle velocity and the throttle opening degree in the low temperature condition. The target rotational speed for the engine in the low temperature condition data may be set to be higher at least in part than the target rotational speed for the engine in the normal condition data at an identical vehicle velocity and an identical throttle opening degree. The controller may determine the target rotational speed for the engine based on the normal condition data in the normal condition. The controller may determine the target rotational speed for the engine based on the low temperature condition data in the low temperature condition. The controller may change the gear ratio of the continuously variable transmission by controlling the electric actuator such that the rotational speed of the engine becomes the target rotational speed. In this case, the rotational speed of the engine in the low temperature condition is appropriately controlled in accordance with the vehicle velocity and the throttle opening degree.

The low temperature condition data may define the relation of the target rotational speed with respect to the vehicle velocity and the throttle opening degree when the temperature of the engine is less than or equal to at a second threshold temperature less than the first threshold temperature. The controller may determine the target rotational speed by interpolation based on the normal condition data, the low temperature condition data, and the temperature of the engine when the temperature of the engine is an intermediate temperature between the first threshold temperature and the second threshold temperature. In this case, the rotational speed of the engine in the low temperature condition is appropriately controlled in accordance with the vehicle velocity and the throttle opening degree.

The target rotational speed in the low temperature condition data may be set to be higher than the target rotational speed in the normal condition data in a range of the vehicle velocity from a predetermined first velocity to a second velocity greater than the first velocity when the throttle opening degree is a predetermined first opening degree. In this case, the rotational speed of the engine gets higher in the low temperature condition of the engine than in the normal condition when the throttle opening degree is the first opening degree, while the vehicle speed falls in a range of the vehicle velocity from the first velocity to the second velocity. Accordingly, the activation of the catalyst is promoted even in the low temperature condition.

The straddled vehicle may further include a centrifugal clutch. The centrifugal clutch may be set in an engaged state that the continuously variable transmission is coupled to the wheel when the vehicle velocity is greater than or equal to a coupling velocity. The coupling velocity may be greater than the first velocity. The target rotational speed in the low temperature condition data may be set to be equal to the target rotational speed in the normal condition data in a range of the vehicle velocity less than the first velocity when the throttle opening degree is the first opening degree. In this case, increase in rotational speed of the engine can be inhibited before the centrifugal clutch is engaged. Accordingly, a negative impact on the behavior of the engine can be inhibited.

The target rotational speed in the low temperature condition data may be set to be equal to the target rotational speed in the normal condition data in a range of the vehicle velocity greater than the second velocity when the throttle opening degree is the first opening degree. When the vehicle velocity is high, the rotational speed of the engine is high; hence, the exhaust gas increases in volume per unit time. Accordingly, the activation of the catalyst is promoted, whereby unnecessary increase in rotational speed of the engine can be inhibited.

The target rotational speed in the low temperature condition data may be set to be equal to the target rotational speed in the normal condition data regardless of the vehicle velocity when the throttle opening degree is a second opening degree greater than the first opening degree. When the throttle opening degree is large, the amount of fuel with respect to the amount of air taken into the engine is increased, whereby the amount of heat is increased in the engine. Because of this, the exhaust gas increases in volume per engine cycle. Accordingly, the activation of the catalyst is promoted, whereby unnecessary increase in rotational speed of the engine can be inhibited.

The controller may determine the target rotational speed for the engine such that the rotational speed of the engine gets higher in the low temperature condition than in the normal condition. The controller may determine a target gear ratio for the continuously variable transmission based on the target rotational speed. The controller may control the electric actuator such that the gear ratio of the continuously variable transmission is changed based on the target gear ratio. In this case, the gear ratio of the continuously variable transmission is changed based on the target gear ratio. Accordingly, the gear ratio of the continuously variable transmission is changed such that the rotational speed of the engine gets higher in the low temperature condition than in the normal condition.

### Brief description of the drawings

FIG. 1 is a left side view of a straddle vehicle.
FIG. 2 is a cross-sectional top view of an engine unit.
FIG. 3 is a right side view of the structures of the engine unit and the periphery thereof.
FIG. 4 is an enlarged view of a primary pulley and a sheave drive mechanism.
FIG. 5 is an enlarged view of the primary pulley and the sheave drive mechanism.
FIG. 6 is an enlarged view of a secondary pulley and a centrifugal clutch.
FIG. 7 is an enlarged view of the secondary pulley and the centrifugal clutch.
FIG. 8 is a schematic diagram of a control system of a continuously variable transmission in the straddled vehicle.
FIG. 9 is a flowchart showing a series of processing for controlling a gear ratio of the continuously variable transmission.
FIG. 10 is a chart exemplifying target rotational speed data.
FIG. 11 is a chart exemplifying the target rotational speed data.
FIG. 12 is a chart exemplifying the target rotational speed data.
FIG. 13 is a chart exemplifying target sheave position data.

### Embodiments of the invention

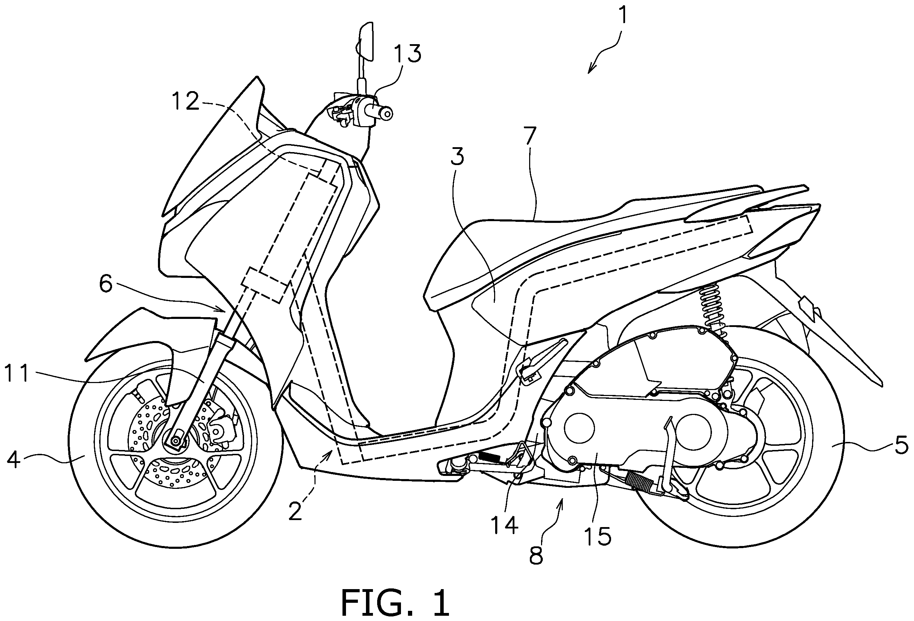

A straddled vehicle according to an embodiment will be hereinafter explained with reference to drawings. FIG. 1 is a left side view of a straddled vehicle 1 according to the embodiment. The straddled vehicle 1 according to the present embodiment is a scooter. As shown in FIG. 1, the straddled vehicle 1 includes a vehicle body frame 2, a vehicle body cover 3, wheels 4 and 5, a steering device 6, a seat 7, and an engine unit 8. It should be noted that in the present embodiment, the terms "front", "rear", "right", and "left" are defined as referring to front, rear, right, and left directions seen from a rider seated on the seat 7.

The vehicle body cover 3 covers the vehicle body frame 2. The wheels 4 and 5 include a front wheel 4 and a rear wheel 5. The steering device 6 is supported by the vehicle body frame 2 so as to be turnable right and left. The steering device 6 includes a front fork 11, a steering shaft 12, and a handle member 13. The front fork 11 supports the front wheel 4 such that the front wheel 4 is made rotatable. The steering shaft 12 is connected to the front fork 11. The steering shaft 12 is supported by the vehicle body frame 2 so as to be turnable right and left. The handle member 13 is connected to the steering shaft 12.

The seat 7 is disposed behind the handle member 13. The engine unit 8 is disposed below the seat 7. The engine unit 8 is supported by the vehicle body frame 2 so as to be pivotable up and down. The rear wheel 5 is rotatably supported by the engine unit 8. The engine unit 8 includes an engine 14 and a continuously variable transmission 15. The continuously variable transmission 15 is disposed on a lateral side of the engine 14. The continuously variable transmission 15 transmits a driving force, generated from the engine 14, to the rear wheel 5.

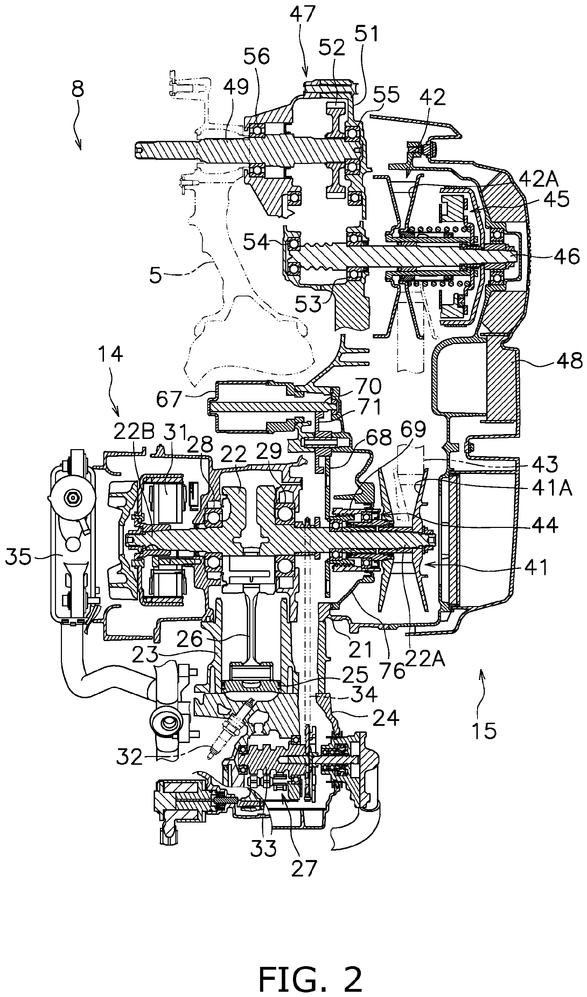

FIG. 2 is a cross-sectional top view of the engine unit 8. As shown in FIG. 2, the engine 14 includes a crankcase 21, a crankshaft 22, a cylinder body 23, a cylinder head 24, a piston 25, a connecting rod 26, and a valve actuating mechanism 27. The crankshaft 22 is accommodated in the crankcase 21. The crankshaft 22 is rotatably supported by the crankcase 21 through bearings 28 and 29. The crankshaft 22 includes a first shaft end 22A and a second shaft end 22B. The continuously variable transmission 15 is connected to the first shaft end 22A. An electric power generator 31 is connected to the second shaft end 22B.

The cylinder body 23 is connected to the crankcase 21. The cylinder head 24 is connected to the cylinder body 23. The connecting rod 26 and the piston 25 are disposed inside the cylinder body 23. The piston 25 is connected to the crankshaft 22 through the connecting rod 26. An ignition device 32 is attached to the cylinder head 24. The valve actuating mechanism 27 includes a camshaft 33. A cam chain 34 is wound about the camshaft 33 and the crankshaft 22. The rotation of the crankshaft 22 is transmitted to the camshaft 33 through the cam chain 34, whereby the camshaft 33 is rotated. Accordingly, an intake valve and an exhaust valve of the engine 14 (both not shown in the drawings) are driven by the valve actuating mechanism 27.

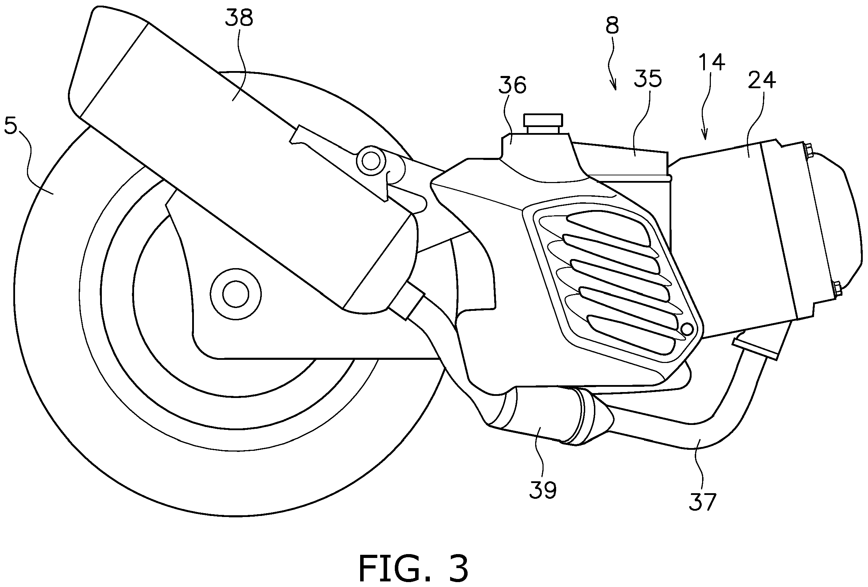

FIG. 3 is a right side view of the structures of the engine unit 8 and the periphery thereof. As shown in FIG. 3, the straddled vehicle 1 includes a radiator 35 and a radiator cover 36. The radiator 35 cools a cooling liquid of the engine 14. The radiator cover 36 covers the radiator 35. The straddled vehicle 1 includes an exhaust pipe 37, a silencer 38, and a catalyst 39. The exhaust pipe 37 is connected to the cylinder head 24 of the engine 14. The silencer 38 is connected to the exhaust pipe 37. The catalyst 39 is provided in an intermediate part of the exhaust pipe 37. The catalyst 39 is, for instance, a three-way catalyst. The catalyst 39 purifies the exhaust gas emitted from the engine 14.

The continuously variable transmission 15 shown in FIG. 2 is an electronically controlled transmission. In other words, the continuously variable transmission 15 is electrically controlled to change a gear ratio in accordance with a command signal transmitted thereto from a controller (to be described). As shown in FIG. 2, the continuously variable transmission 15 includes a primary pulley 41, a secondary pulley 42, a belt 43, a sheave drive mechanism 44, a centrifugal clutch 45, an output shaft 46, a reducer 47, and a transmission case 48.

The primary pulley 41 is connected to the crankshaft 22. The primary pulley 41 includes a first groove 41A having a V shape. The secondary pulley 42 is connected to the rear wheel 5 through an axle 49. The secondary pulley 42 includes a second groove 42A having a V shape. The belt 43 is wound about the primary pulley 41 and the secondary pulley 42. The belt 43 has a trapezoidal cross section fitted in shape to the first groove 41A and the second groove 42A. The secondary pulley 42 is connected to the output shaft 46 through the centrifugal clutch 45. The output shaft 46 is connected to the axle 49 through the reducer 47.

The reducer 47 includes a reducer case 51 and a gear 52. The reducer case 51 accommodates the gear 52. The output shaft 46 is rotatably supported by the reducer case 51 through bearings 53 and 54. The axle 49 is rotatably supported by the reducer case 51 through bearings 55 and 56. The gear 52 transmits the rotation of the output shaft 46 to the axle 49. It should be noted that FIG. 2 illustrates only the gear 52 among a plurality of gears of the reducer 47, while omitting illustration of the rest of the plurality of gears. The transmission case 48 axially covers the primary pulley 41, the secondary pulley 42, the belt 43, the centrifugal clutch 45, and the output shaft 46.

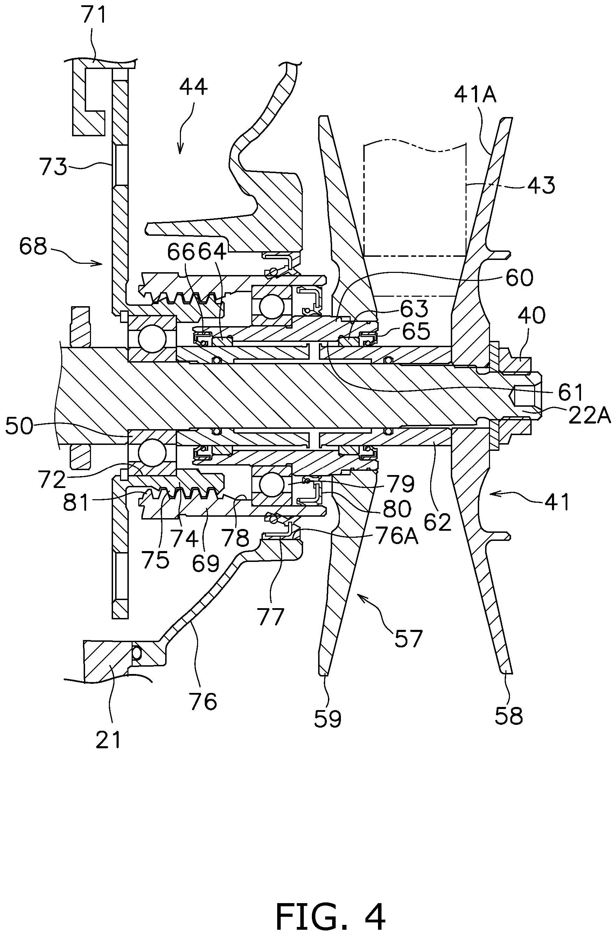

FIG. 4 is an enlarged view of the primary pulley 41 and the sheave drive mechanism 44. As shown in FIG. 4, the primary pulley 41 includes a first movable sheave 57 and a first stationary sheave 58. The first movable sheave 57 is supported by the crankshaft 22 to be movable in an axial direction of the crankshaft 22 (hereinafter simply referred to as "the axial direction"). The first movable sheave 57 is disposed on the inner side (the left side in FIG. 4) of the first stationary sheave 58 in the axial direction. The first movable sheave 57 is supported by the crankshaft 22 to be non-rotatable in a circumferential direction of the crankshaft 22. For example, the first movable sheave 57 is attached to the crankshaft 22 with one or more splines. The first movable sheave 57 is rotated unitarily with the crankshaft 22.

The first movable sheave 57 includes a first sheave portion 59 and a first boss portion 60. The first sheave portion 59 is disposed to face the first stationary sheave 58. The first groove 41A is provided between the first sheave portion 59 and the first stationary sheave 58. The first boss portion 60 axially extends from the first sheave portion 59. The first boss portion 60 includes a first boss hole 61. The first boss hole 61 extends axially through the first boss portion 60. The crankshaft 22 extends through the first boss hole 61.

The crankshaft 22 includes an outer shaft 62. The outer shaft 62 is attached to the outer peripheral surface of the first shaft end 22A. The first movable sheave 57 described above is attached to the outer shaft 62 with one or more splines. The outer shaft 62 extends through the first boss hole 61. A first bushing 63 and a second busing 64 are press-fitted into the first boss hole 61. The first and second bushings 63 and 64 are each made of a sliding material. The first and second bushings 63 and 64 are disposed between the inner peripheral surface of the first boss hole 61 and the outer peripheral surface of the outer shaft 62. When the first movable sheave 57 is axially moved, the first and second bushings 63 and 64 are axially slid against the outer shaft 62. The first boss hole 61 is filled with a lubricant such as grease. The first boss portion 60 and the outer shaft 62 are sealed therebetween by oil seals 65 and 66.

The first stationary sheave 58 is fixed to the crankshaft 22. The first stationary sheave 58 is fixed to the crankshaft 22 by a nut 40. The first stationary sheave 58 is fixed to the crankshaft 22, while being axially immovable. The first stationary sheave 58 is fixed to the crankshaft 22, while being non-rotatable with respect thereto. The first stationary sheave 58 is rotated unitarily with the crankshaft 22.

The sheave drive mechanism 44 axially moves the first movable sheave 57. As shown in FIG. 2, the sheave drive mechanism 44 includes an electric actuator 67, a first drive member 68, and a second drive member 69. The electric actuator 67 is, for instance, an electric motor. However, the electric actuator 67 may be a type of actuator other than the electric motor. The electric actuator 67 includes a rotational shaft 70. The rotational shaft 70 is connected to the first drive member 68 through a gear 71. The rotation of the rotational shaft 70 is transmitted to the first drive member 68 through the gear 71.

As shown in FIG. 4, the first drive member 68 includes a first hole 72. The first hole 72 extends axially through the first drive member 68. The crankshaft 22 extends through the first hole 72. The first drive member 68 is supported by the crankshaft 22 through a bearing 50. The first drive member 68 is supported by the crankshaft 22, while being rotatable with respect thereto. The first drive member 68 is supported by the crankshaft 22, while being axially immovable with respect thereto.

The first drive member 68 includes a gear portion 73 and a feed screw portion 74. The gear portion 73 radially extends from the feed screw portion 74 about the crankshaft 22. The gear portion 73 is meshed with the gear 71. The rotation of the rotational shaft 70 of the electric actuator 67 is transmitted to the gear portion 73 through the gear 71. Accordingly, the first drive member 68 is rotated. The feed screw portion 74 axially extends from the gear portion 73. The feed screw portion 74 is provided with a first screw 75 on the outer peripheral surface thereof.

A crankcase cover 76 is attached to the crankcase 21. The crankcase cover 76 includes an opening 76A. The opening 76A is disposed to face the primary pulley 41. The second drive member 69 extends through the opening 76A of the crankcase 21. The second drive member 69 and the crankcase cover 76 are sealed therebetween by an oil seal 77. The second drive member 69 includes a second hole 78. The second hole 78 extends axially through the second drive member 69. The crankshaft 22 and the first boss portion 60 extend through the second hole 78.

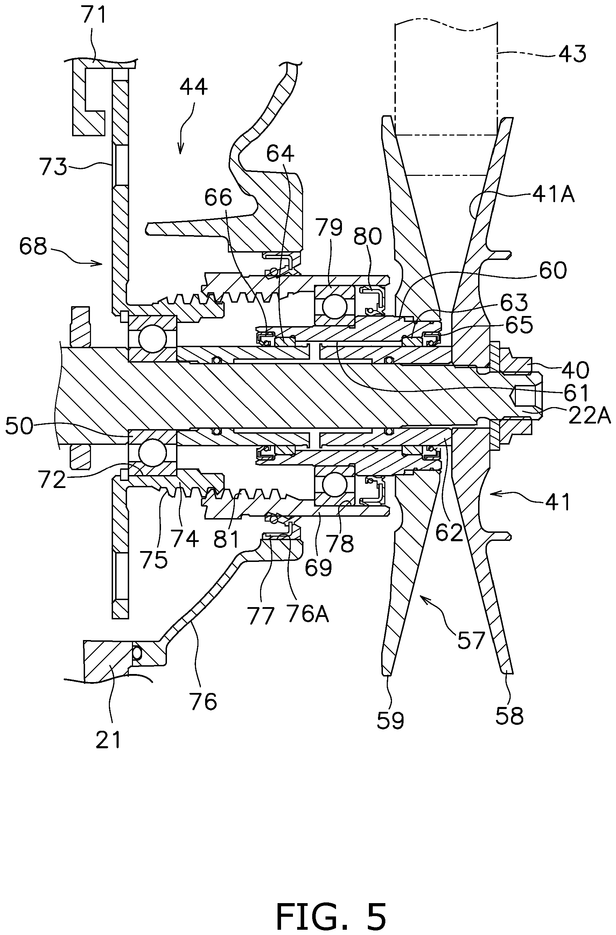

The second drive member 69 is supported by the first boss portion 60 through a bearing 79. The second drive member 69 is supported by the first boss portion 60, while being rotatable with respect thereto. The second drive member 69 is supported by the first boss portion 60, while being axially immovable with respect thereto. The second drive member 69 is axially moved unitarily with the first movable sheave 57. The second drive member 69 and the first boss portion 60 are sealed therebetween by an oil seal 80. The second drive member 69 is provided with a second screw 81 on the inner peripheral surface thereof. The second screw 81 is meshed with the first screw 75. When the first drive member 68 is rotated, the second drive member 69 is axially moved as shown in FIG. 5. Accordingly, the first movable sheave 57 is axially moved.

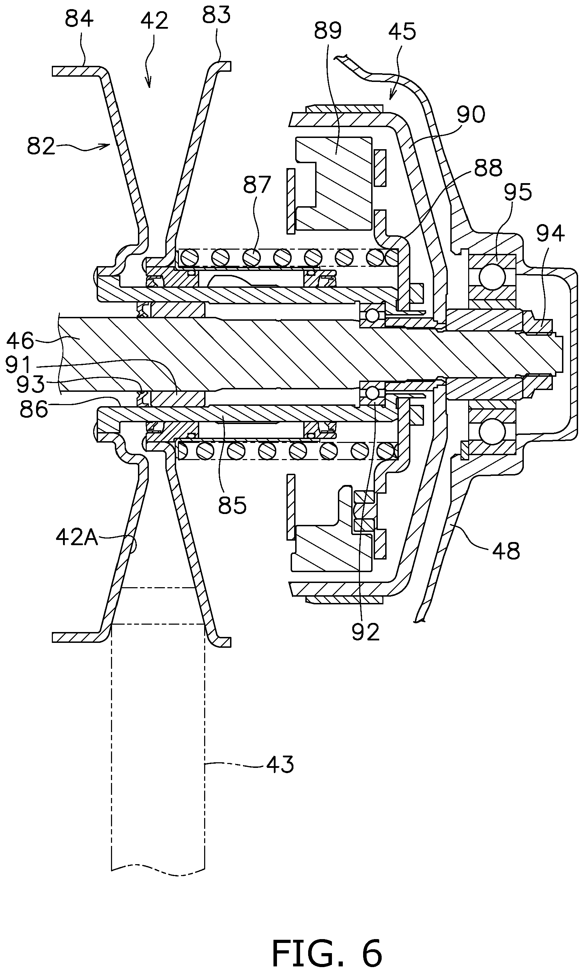

FIG. 6 is an enlarged view of the secondary pulley 42 and the centrifugal clutch 45. As shown in FIG. 6, the secondary pulley 42 includes a second stationary sheave 82 and a second movable sheave 83. The second stationary sheave 82 is supported by the output shaft 46, while being rotatable with respect thereto. The second stationary sheave 82 is supported by the output shaft 46, while being axially immovable with respect thereto. The second stationary sheave 82 includes a second sheave portion 84 and a second boss portion 85. The second sheave portion 84 is disposed to face the second movable sheave 83. The second groove 42A is provided between the second sheave portion 84 and the second movable sheave 83. The second boss portion 85 axially extends from the second sheave portion 84. The second boss portion 85 includes a second boss hole 86. The second boss hole 86 extends axially through the second boss portion 85.

The output shaft 46 is rotatably supported by the transmission case 48 through a bearing 95. The output shaft 46 extends through the second boss hole 86. A bushing 91 is press-fitted into the second boss hole 86. The bushing 91 is made of a sliding material. The bushing 91 is disposed between the inner peripheral surface of the second boss hole 86 and the outer peripheral surface of the output shaft 46. The second boss portion 85 is supported by the bushing 91 and a bearing 92, while being rotatable with respect to the output shaft 46. The second boss hole 86 is filled with a lubricant such as grease. The second boss portion 85 and the output shaft 46 are sealed therebetween by an oil seal 93.

The second movable sheave 83 is disposed on an outer side (the right side in FIG. 6) of the second stationary sheave 82 in the axial direction. The second movable sheave 83 is supported by the second boss portion 85, while being non-rotatable thereto. The second movable sheave 83 is rotated unitarily with the second stationary sheave 82. The second movable sheave 83 is supported by the second boss portion 85, while being axially movable with respect thereto. For example, the second movable sheave 83 is attached to the second boss portion 85 with one or more splines. A spring 87 is disposed between the second movable sheave 83 and the centrifugal clutch 45. The spring 87 urges the second movable sheave 83 toward the second stationary sheave 82.

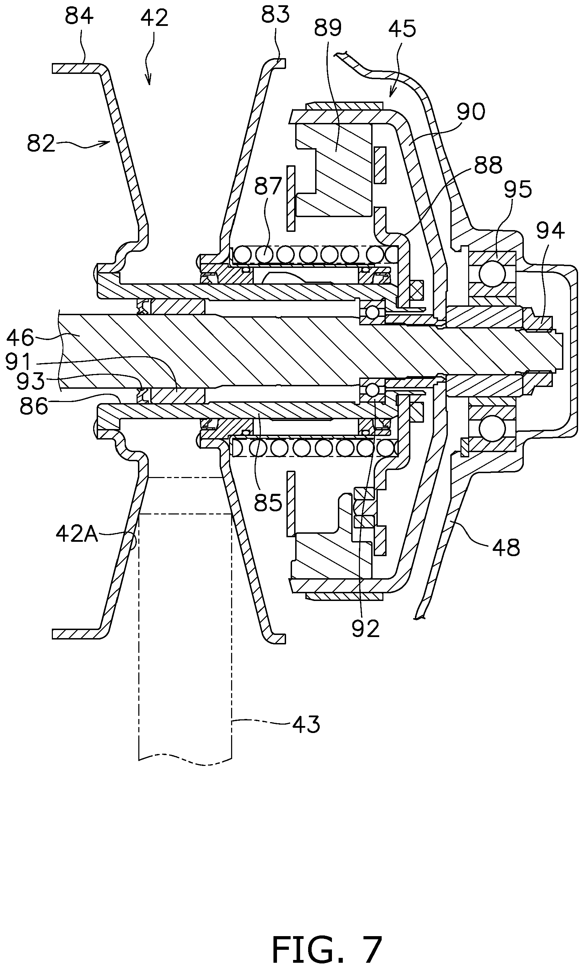

As shown in FIG. 6, when the vehicle velocity is less than a predetermined coupling velocity, the centrifugal clutch 45 is set in a disengaged state that the continuously variable transmission 15 is decoupled from the rear wheel 5. As shown in FIG. 7, when the vehicle velocity is greater than or equal to the coupling velocity, the centrifugal clutch 45 is set in an engaged state that the continuously variable transmission 15 is coupled to the rear wheel 5. The centrifugal clutch 45 includes a drive plate 88, clutch shoes 89, and a clutch outer 90.

The drive plate 88 is fixed to the second boss portion 85. The drive plate 88 is rotated unitarily with the second boss portion 85. The clutch shoes 89 are connected to the drive plate 88. The clutch shoes 89 are rotated unitarily with the drive plate 88. The clutch shoes 89 are supported by the drive plate 88, while being radially movable with respect thereto. The clutch shoes 89 are urged radially inward by clutch springs (not shown in the drawings). The clutch outer 90 is fixed to the output shaft 46 by a nut 94. The clutch outer 90 is rotated unitarily with the output shaft 46. The clutch outer 90 radially covers the clutch shoes 89.

When the vehicle velocity is less than the predetermined coupling velocity, the clutch shoes 89 are kept separated from the clutch outer 90 by the urging forces of the clutch springs. Because of this, the centrifugal clutch 45 is set in the disengaged state, whereby the rotation of the secondary pulley 42 is not transmitted to the output shaft 46. When the vehicle velocity is greater than or equal to the coupling velocity, the clutch shoes 89 are moved radially outward by centrifugal forces against the urging forces of the clutch springs. Accordingly, the clutch shoes 89 are contacted to the clutch outer 90, whereby the centrifugal clutch 45 is set in the engaged state. When the centrifugal clutch 45 is set in the engaged state, the rotation of the secondary pulley 42 is transmitted to the output shaft 46 through the drive plate 88, the clutch shoes 89, and the clutch outer 90.

In the continuously variable transmission 15 explained above, when the vehicle velocity is greater than or equal to the coupling velocity, the centrifugal clutch 45 is set in the engaged state. Accordingly, the rotation of the crankshaft 22 is transmitted to the rear wheel 5 through the primary pulley 41, the belt 43, the secondary pulley 42, the centrifugal clutch 45, the output shaft 46, the reducer 47, and the axle 49. This causes the straddled vehicle 1 to travel.

Besides, the first movable sheave 57 is moved by the sheave drive mechanism 44, whereby the gear ratio of the continuously variable transmission 15 is electrically controlled. It should be noted that the gear ratio of the continuously variable transmission 15 means a ratio of the rotational speed of the crankshaft 22 to that of the output shaft 46.

Speaking in detail, when the first drive member 68 is rotated by the electric actuator 67 in a given direction, the second drive member 69 is moved to the outer side in the axial direction as shown in FIG. 5. Accordingly, the first movable sheave 57 is moved together with the second drive member 69 to the outer side in the axial direction. When the first movable sheave 57 is moved to the outer side in the axial direction, the first groove 41A is reduced in width between the first movable sheave 57 and the first stationary sheave 58. Accordingly, the diameter at the wound position of the belt 43 in the primary pulley 41 (hereinafter referred to as "first wound diameter") is increased. When the first wound diameter is increased, the diameter at the wound position of the belt 43 in the secondary pulley 42 (hereinafter referred to as "second wound diameter") is reduced. Accordingly, the gear ratio is reduced. It should be noted that in this case, as shown in FIG. 7, the second movable sheave 83 is moved to the outer side in the axial direction against the urging force of the spring 87, whereby the second groove 42A is increased in width.

When the first drive member 68 is rotated by the electric actuator 67 in the reverse direction to the given direction, the second drive member 69 is moved to the inner side in the axial direction as shown in FIG. 4. Accordingly, the first movable sheave 57 is moved together with the second drive member 69 to the inner side in the axial direction. When the first movable sheave 57 is moved to the inner side in the axial direction, the first groove 41A is increased in width between the first movable sheave 57 and the first stationary sheave 58. Accordingly, the first wound diameter is reduced. When the first wound diameter is reduced, the second wound diameter is increased. Accordingly, the gear ratio is increased. It should be noted that in this case, as shown in FIG. 6, the second movable sheave 83 is moved to the inner side in the axial direction by the urging force of the spring 87, whereby the second groove 42A is reduced in width.

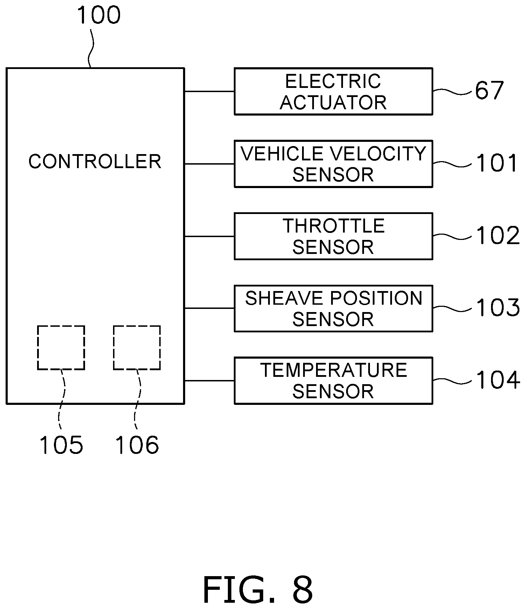

Next, explanation will be made for controlling the gear ratio of the continuously variable transmission 15 in the straddled vehicle 1. FIG. 8 is a schematic diagram of a control system of the continuously variable transmission 15 in the straddled vehicle 1. As shown in FIG. 8, the straddled vehicle 1 includes a controller 100, a vehicle velocity sensor 101, a throttle sensor 102, a sheave position sensor 103, and a temperature sensor 104. The controller 100 includes a processor 105 and a storage device 106. The processor 105 is a CPU (Central Processing Unit), for instance, and executes processing for controlling the gear ratio of the continuously variable transmission 15. The storage device 106 includes, for instance, memories such as a RAM (Random Access Memory) and a ROM (Read Only Memory). The storage device 106 may include an auxiliary storage device such as an HDD (Hard Disk Drive) or an SSD (Solid State Drive). The storage device 106 has stored programs and data for controlling the gear ratio of the continuously variable transmission 15.

The vehicle velocity sensor 101 detects the vehicle velocity of the straddled vehicle 1. The vehicle velocity sensor 101 detects, for instance, the rotational speed of the axle 49. The vehicle velocity sensor 101 outputs a signal indicating the vehicle velocity to the controller 100. The throttle sensor 102 detects the throttle opening degree of the engine 14. The throttle sensor 102 outputs a signal indicating the throttle opening degree of the engine 14 to the controller 100. The throttle opening degree of the engine 14 is changed in accordance with the operation of an accelerator by the rider. The temperature sensor 104 detects the temperature of the engine 14. The temperature sensor 104 detects, for instance, the temperature of a cooling liquid of the engine 14. The temperature sensor 104 outputs a signal indicating the temperature of the engine 14 to the controller 100.

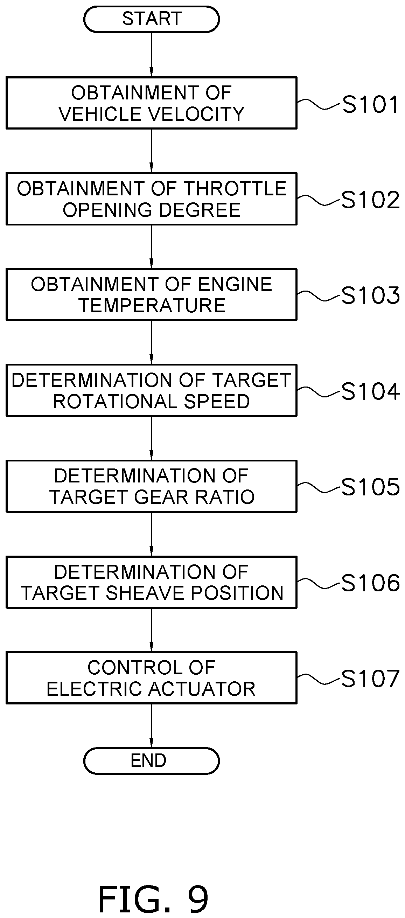

The controller 100 is connected to the sensors 101 to 104 described above in communicable manner. The controller 100 controls the gear ratio of the continuously variable transmission 15 by controlling the electric actuator 67 based on the signals transmitted thereto form the sensors 101 to 104 described above. FIG. 9 is a flowchart showing the processing for controlling the gear ratio of the continuously variable transmission 15.

As shown in FIG. 9, in step S101, the controller 100 obtains the vehicle velocity. The controller 100 obtains the vehicle velocity from the signal transmitted thereto from the vehicle velocity sensor 101. In step S102, the controller 100 obtains the throttle opening degree. The controller 100 obtains the throttle opening degree from the signal transmitted thereto from the throttle sensor 102. In step S103, the controller 100 obtains the temperature of the engine 14. The controller 100 obtains the temperature of the engine 14 from the signal transmitted thereto from the temperature sensor 104.

In step S104, the controller 100 determines a target rotational speed for the engine 14. The controller 100 determines the target rotational speed for the engine 14 based on the vehicle velocity and the throttle opening degree. Target rotational speed data D1 define a relation among the vehicle velocity, the throttle opening degree, and the target rotational speed for the engine 14.

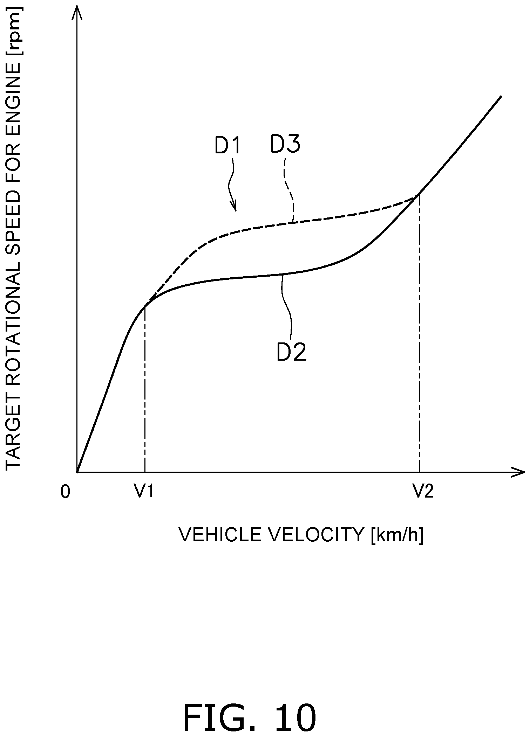

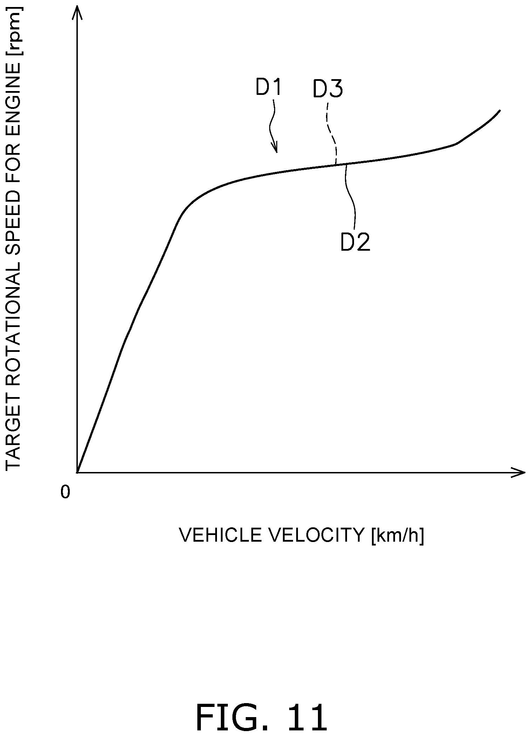

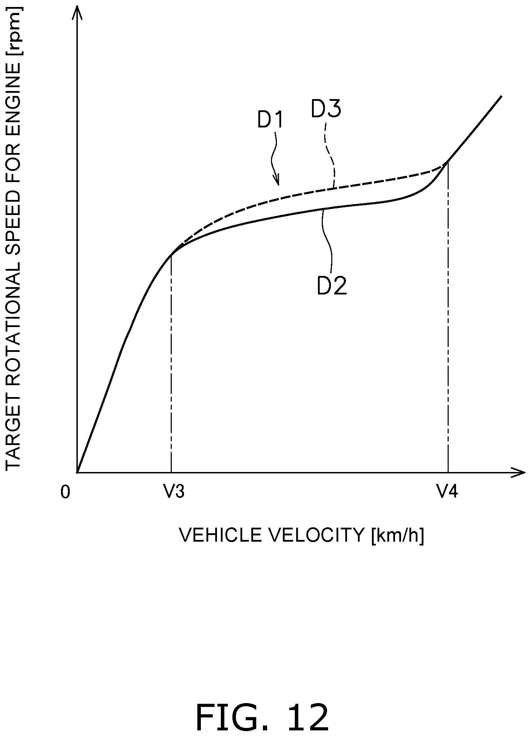

FIGS. 10 to 12 are charts exemplifying the target rotational speed data D1. In each of FIGS. 10 to 12, the horizontal axis indicates the vehicle velocity, while the vertical axis indicates the target rotational speed for the engine 14. Besides, the target rotational speed data D1 shown in FIG. 10, those shown in FIG. 11, and those shown in FIG. 12 are different in throttle opening degree from each other. FIG. 10 shows the target rotational speed data D1, where the throttle opening degree is set to be a first opening degree. FIG. 11 shows the target rotational speed data D1, where the throttle opening degree is set to be a second opening degree greater than the first opening degree. FIG. 12 shows the target rotational speed data D1, where the throttle opening degree is set to be a third opening degree that is an intermediate opening degree between the first opening degree and the second opening degree.

As shown in FIGS. 10 to 12, the target rotational speed data D1 includes normal condition data D2 and low temperature condition data D3. When the temperature of the engine 14 is greater than a predetermined first threshold temperature, the controller 100 determines the target rotational speed for the engine 14 based on the vehicle velocity and the throttle opening degree with reference to the normal condition data D2. When the temperature of the engine 14 is less than or equal to the first threshold temperature, the controller 100 determines the target rotational speed for the engine 14 based on the vehicle velocity and the throttle opening degree with reference to the low temperature condition data D3.

Speaking in detail, the controller 100 has stored the normal condition data D2 and the low temperature condition data D3 served as a baseline. When the temperature of the engine 14 is less than or equal to a second threshold temperature less than the first threshold temperature, the controller 100 determines the target rotational speed for the engine 14 based on the vehicle velocity and the throttle opening degree with reference to the low temperature condition data D3 served as the baseline.

When the temperature of the engine 14 is an intermediate temperature between the first threshold temperature and the second threshold temperature, the controller 100 determines the target rotational speed by interpolation based on the normal condition data D2, the low temperature condition data D3 served as the baseline, and the temperature of the engine 14. For example, the controller 100 calculates the low temperature condition data D3 at the intermediate temperature between the first threshold temperature and the second threshold temperature by multiplying the low temperature condition data D3 served as the baseline by a predetermined reflection rate. The reflection rate gets higher as the intermediate temperature between the first threshold temperature and the second threshold temperature gets lower. Then, the controller 100 determines the target rotational speed for the engine 14 based on the vehicle velocity and the throttle opening degree with reference to the low temperature condition data D3 calculated by interpolation.

For example, when the temperature of the engine 14 is greater than or equal to the first threshold temperature, in step S104, the controller 100 determines the target rotational speed for the engine 14 based on the vehicle velocity and the throttle opening degree with reference to the normal condition data D2 shown in relevant one of FIGS. 10 to 12.

In step S105, the controller 100 determines a target gear ratio. The controller 100 calculates the target gear ratio based on the target rotational speed for the engine 14.

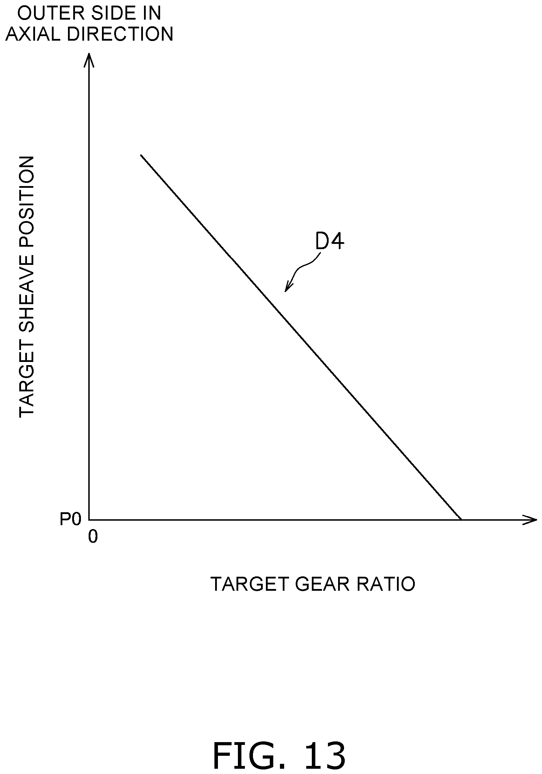

In step S106, the controller 100 determines a target sheave position. The gear ratio of the continuously variable transmission 15 is set in accordance with the position of the first movable sheave 57. The controller 100 determines the target sheave position based on the target gear ratio. When described in detail, the controller 100 has stored target sheave position data D4. The target sheave position data D4 define a relation between the target gear ratio and the target sheave position. FIG. 13 is a chart exemplifying the target sheave position data D4. The target sheave position indicates a distance from a predetermined reference position.

For example, the target sheave position is increased in distance from the reference position to the outer side in the axial direction. As shown in FIG. 13, with increase in target gear ratio, the target sheave position is gradually reduced in distance from the reference position. In other words, with increase in target gear ratio, the target sheave position is gradually shifted to the inner side in the axial direction. With reduction in target gear ratio, the target sheave position is gradually increased in distance from the reference position. In other words, with increase in target gear ratio, the target sheave position is gradually shifted to the outer side in the axial direction.

In step S107, the controller 100 controls the electric actuator 67 such that the first movable sheave 57 is moved to the target sheave position. Accordingly, the gear ratio of the continuously variable transmission 15 is changed such that the rotational speed of the engine 14 becomes the target rotational speed.

When the temperature of the engine 14 is less than or equal to the first threshold temperature, in step S104, the controller 100 determines the target rotational speed for the engine 14 with reference to the low temperature condition data D3. The target rotational speed for the engine 14 in the low temperature condition data D3 is set to be higher at least in part than that in the normal condition data D2 at an identical vehicle velocity and an identical throttle opening degree. Because of this, in a low temperature condition that the temperature of the engine 14 is less than or equal to the first threshold temperature, the controller 100 controls the gear ratio of the continuously variable transmission 15 by determining the target rotational speed for the engine 14 such that the rotational speed of the engine 14 becomes higher than that in a normal condition.

Speaking in detail, as shown in FIG. 10, when the throttle opening degree is the first opening degree, the target rotational speed in the low temperature condition data D3 is set to be higher than that in the normal condition data D2 in a range of vehicle velocity from a predetermined first velocity V1 to a second velocity V2 greater than the first velocity V1. When the throttle opening degree is the first opening degree, the target rotational speed in the low temperature condition data D3 is set to be equal to that in the normal condition data D2 in a range of vehicle velocity less than the first velocity V1. The first velocity V1 is less than the coupling velocity described above, at which the centrifugal clutch 45 is set in the engaged state. When the throttle opening degree is the first opening degree, the target rotational speed in the low temperature condition data D3 is set to be equal to that in the normal condition data D2 in a range of vehicle velocity greater than the second velocity V2.

As shown in FIG. 12, when the throttle opening degree is the third opening degree that is the intermediate opening degree between the first opening degree and the second opening degree, the target rotational speed in the low temperature condition data D3 is set to be greater than that in the normal condition data D2 in a range of vehicle velocity from a predetermined third velocity V3 to a fourth velocity V4 greater than the third velocity V3. When the throttle opening degree is the third opening degree, the target rotational speed in the low temperature condition data D3 is set to be equal to that in the normal condition data D2 in a range of vehicle velocity less than the third velocity V3. The third velocity V3 is less than the coupling velocity described above, at which the centrifugal clutch 45 is set in the engaged state. When the throttle opening degree is the third opening degree, the target rotational speed in the low temperature condition data D3 is set to be equal to that in the normal condition data D2 in a range of vehicle velocity greater than the fourth velocity V4.

As shown in FIG. 11, when the throttle opening degree is the second opening degree, the target rotational speed in the low temperature condition data D3 is set to be equal to that in the normal condition data D2 regardless of the vehicle velocity.

In the straddled vehicle 1 according to the present embodiment explained above, when the engine 14 is in the low temperature condition, the gear ratio of the continuously variable transmission 15 is changed such that the rotational speed of the engine 14 becomes higher than that in the normal condition. Accordingly, even in the low temperature condition, the exhaust gas increases in volume, whereby the activation of the catalyst 39 is promoted. Besides, the gear ratio of the continuously variable transmission 15 is electrically controlled, whereby the rotational speed of the engine 14 is increased. Because of this, a negative impact on the behavior of the engine 14 can be more inhibited than when the rotational speed of the engine 14 is increased by changing the throttle opening degree.

One embodiment of the present invention has been explained above. However, the present invention is not limited to the embodiment described above, and a variety of changes can be made without departing from the gist of the present invention.

The straddled vehicle 1 is not limited to the scooter, and alternatively, may be a vehicle of another type such as a street type, an off-road type, or a moped type. The configuration of the continuously variable transmission 15 is not limited to that in the embodiment described above and may be changed. The processing for controlling the gear ratio of the continuously variable transmission 15 is not limited to that in the embodiment described above and may be changed.

### REFERENCE SIGNS LIST

5: Rear wheel, 14: Engine, 15: Continuously variable transmission, 22: Crankshaft, 39: Catalyst, 41: Primary pulley, 42: Secondary pulley, 43: Belt, 45: Centrifugal clutch, 57: First movable sheave, 58: First stationary sheave, 67: Electric actuator, 82: Second stationary sheave, 83: Second movable sheave, 100: Controller, 101: Vehicle velocity sensor, 102: Throttle sensor, 104: Temperature sensor

## Claims

1. A straddled vehicle (1) comprising:
an engine (14);
a catalyst (39) purifying an exhaust gas emitted from the engine (14);
a wheel (5);
a continuously variable transmission (15) transmitting a driving force generated from the engine (14) to the wheel (5);
a temperature sensor (104) detecting a temperature of the engine (14); and
a controller (100) configured to control the continuously variable transmission (15), wherein
the continuously variable transmission (15) is electrically controlled to change a gear ratio in accordance with a command signal transmitted thereto from the controller (100),
the controller (100) is configured to
obtain the temperature of the engine (14), and
control the gear ratio of the continuously variable transmission (15) such that a rotational speed of the engine (14) gets higher in a low temperature condition that the temperature of the engine (14) is less than or equal to a predetermined first threshold temperature than in a normal condition that the temperature of the engine (14) is greater than the first threshold temperature.

2. The straddled vehicle according to claim 1, wherein
the engine (14) includes a crankshaft (22),
the continuously variable transmission (15) includes
a primary pulley (41) including a first movable sheave (57) and a first stationary sheave (58), the primary pulley (41) being connected to the crankshaft (22),
a secondary pulley (42) including a second movable sheave (82) and a second stationary sheave (83), the secondary pulley (42) being attached to the wheel (5),
a belt (43) wound about the primary pulley (41) and the secondary pulley (42), and
an electric actuator (67) configured to change the gear ratio of the continuously variable transmission (15) by moving the first movable sheave (57) with respect to the first stationary sheave (58), and
the controller (100) is configured to change the gear ratio of the continuously variable transmission (15) by controlling the electric actuator (67) such that the rotational speed of the engine (14) gets higher in the low temperature condition than in the normal condition.

3. The straddled vehicle according to claim 2, further comprising:
a vehicle velocity sensor (101) detecting a vehicle velocity of the straddled vehicle (1); and
a throttle sensor (102) detecting a throttle opening degree of the engine (14), wherein
the controller (100) has stored normal condition data and low temperature condition data, the normal condition data defining a relation of a target rotational speed for the engine (14) with respect to the vehicle velocity and the throttle opening degree in the normal condition, the low temperature condition data defining a relation of the target rotational speed for the engine (14) with respect to the vehicle velocity and the throttle opening degree in the low temperature condition,
the target rotational speed for the engine (14) in the low temperature condition data is set to be higher at least in part than the target rotational speed for the engine (14) in the normal condition data at an identical vehicle velocity and an identical throttle opening degree,
the controller (100) is configured to
determine the target rotational speed for the engine (14) based on the normal condition data in the normal condition,
determine the target rotational speed for the engine (14) based on the low temperature condition data in the low temperature condition, and
change the gear ratio of the continuously variable transmission (15) by controlling the electric actuator (67) such that the rotational speed of the engine (14) becomes the target rotational speed.

4. The straddled vehicle according to claim 3, wherein
the low temperature condition data define the relation of the target rotational speed with respect to the vehicle velocity and the throttle opening degree when the temperature of the engine (14) is less than or equal to at a second threshold temperature less than the first threshold temperature, and
the controller (100) is configured to determine the target rotational speed by interpolation based on the normal condition data, the low temperature condition data, and the temperature of the engine (14) when the temperature of the engine (14) is an intermediate temperature between the first threshold temperature and the second threshold temperature.

5. The straddled vehicle according to claim 3, wherein the target rotational speed in the low temperature condition data is set to be higher than the target rotational speed in the normal condition data in a range of the vehicle velocity from a predetermined first velocity to a second velocity greater than the first velocity when the throttle opening degree is a predetermined first opening degree.

6. The straddled vehicle according to claim 5, further comprising:
a centrifugal clutch (45) set in an engaged state that the continuously variable transmission (15) is coupled to the wheel (5) when the vehicle velocity is greater than or equal to a coupling velocity, wherein
the coupling velocity is greater than the first velocity, and
the target rotational speed in the low temperature condition data is set to be equal to the target rotational speed in the normal condition data in a range of the vehicle velocity less than the first velocity when the throttle opening degree is the first opening degree.

7. The straddled vehicle according to claim 5, wherein the target rotational speed in the low temperature condition data is set to be equal to the target rotational speed in the normal condition data in a range of the vehicle velocity greater than the second velocity when the throttle opening degree is the first opening degree.

8. The straddled vehicle according to claim 5, wherein the target rotational speed in the low temperature condition data is set to be equal to the target rotational speed in the normal condition data regardless of the vehicle velocity when the throttle opening degree is a second opening degree greater than the first opening degree.

9. The straddled vehicle according to claim 2, wherein
the controller (100) is configured to
determine the target rotational speed for the engine (14) such that the rotational speed of the engine (14) gets higher in the low temperature condition than in the normal condition,
determine a target gear ratio for the continuously variable transmission (15) based on the target rotational speed, and
control the electric actuator (67) such that the gear ratio of the continuously variable transmission (15) is changed based on the target gear ratio.
